# FASCICULE DE BREVET EUROPEEN

(11) **EP 0 873 457 B1**
(45) Date de publication et mention de la délivrance du brevet: **09.04.2003**
(21) Numéro de dépôt: 97900249.0
(22) Date de dépôt: 08.01.1997
(51) Int. Cl.: E04H 9/02, E01D 19/00, F16F 9/22, F16F 9/26, F16F 9/34, F16F 9/512

(54) **DISPOSITIF D'AMORTISSEMENT POUR DES ELEMENTS D'UNE STRUCTURE DE GENIE CIVIL**
DÄMPFUNGSVORRICHTUNG FÜR HOCH- UND TIEFBAUELEMENTE
DAMPING DEVICE FOR ELEMENTS OF A CIVIL ENGINEERING CONSTRUCTION

(30) Priorité: 09.01.1996 FR 9600162
(43) Date de publication de la demande: 28.10.1998
(73) Titulaire: FREYSSINET INTERNATIONAL (STUP), F-78140 Velizy Villacoublay (FR)
(72) Inventeur: DE LA FUENTE, Carlos, F-92000 Nanterre (FR)
(74) Mandataire: CAPRI SARL
(86) Numéro de dépôt international: FR9700032
(87) Numéro de publication internationale: WO97025497

(56) Documents cités:
- WO-A-92/13158
- DE-A- 1 580 552
- FR-A- 2 544 432
- FR-A- 2 625 540
- GB-A- 719 666
- GB-A- 1 362 409
- US-A- 2 090 751
- US-A- 2 309 499
- US-A- 5 347 771
- US-A- 5 462 141

## Description

La présente invention concerne un dispositif de liaison entre deux éléments d'une structure de génie civil et concerne plus particulièrement un dispositif d'amortissement hydraulique entre un premier et un second élément d'une structure de génie civil, tel qu'un pont.

Les dispositifs de liaison, et en particulier les dispositifs d'amortissement, servent notamment à amortir les effets d'un séisme, en particulier dans le cas des ponts, soit par dissipation d'énergie, soit par transmission d'effort, lors des mouvements rapides imposés par le séisme.

Il existe principalement deux types de dispositifs d'amortissement capables de dissiper de l'énergie pendant leur fonctionnement lors d'un séisme, à savoir les dispositifs d'amortissement élastoplastique et les dispositifs d'amortissement oléodynamique.

Les dispositifs d'amortissement élastoplastique dissipent l'énergie par plastification alternée d'un métal, généralement de l'acier, qui est sollicité, au-delà d'un certain déplacement, à des contraintes supérieures à la limite d'élasticité. Le rendement de ces dispositifs est toutefois assez médiocre et de plus ils ont une durée de vie très limitée et doivent être remplacés après un nombre limité de cycle.

Les dispositifs d'amortissement oléodynamique ou hydraulique consistent généralement en un vérin ou cylindre muni de deux chambres séparées par un piston. Le piston est généralement relié à l'un des éléments de structure alors que le cylindre est fixé à l'autre élément de structure. Les chambres contiennent un produit fluide qui peut être un liquide, par exemple de l'huile, ou un matériau plus visqueux, par exemple une pâte de silicone. Le principe des. dispositifs d'amortissement oléodynamique est que pendant le séisme, l'écoulement du fluide est possible d'un côté à l'autre du piston. La dissipation d'énergie se fait par perte de charge et se traduit par l'échauffement du fluide. Le rendement de ces dispositifs d'amortissement oléodynamique est élevé mais ils comportent un certain nombre d'inconvénients. Ainsi, pour que le dispositif soit efficace, la pression doit être la plus grande possible dès que celui-ci se met en mouvement. Cette montée en pression rapide est notamment très importante lorsque la course du déplacement doit être limitée à des faibles valeurs pour ne pas dépasser des contraintes excessives dans certains éléments de la structure, en particulier les piles de pont. Certains dispositifs sont munis, à cet effet, d'un accumulateur de pression externe de façon à maintenir une pression minimale permanente. Cette adjonction d'accumulateur de pression extérieure au dispositif est toutefois généralement perçu comme une complication. D'autres dispositifs sont munis d'une soupape externe de décharge qui ouvre un passage lorsque la pression interne augmente brusquement. Ces soupapes sont chères et encombrantes et sont également perçues comme une complication avec leurs circuits hydrauliques extérieurs.

Les documents US-5 347 771 et GB-1 362 409 divulguent des dispositifs comportant deux valves unidirectionnelles fonctionnant chacune dans un sens d'écoulement entre les deux chambres. Ces dispositifs compliquent la fabrication et en augmentent par conséquent les coûts. De plus, la fiabilité de fonctionnement n'est pas optimale en raison de la multiplication de pièces mobiles, et des problèmes d'étanchéité qui leur sont liés.

D'autre part, dans ce type de dispositif d'amortissement oléodynamique, il est généralement prévu un orifice de très petit diamètre permettant le passage de fluide entre les chambres et donc le mouvement du piston, à faible vitesse. Ainsi, les effets thermiques peuvent être compensés. Dans ce type de dispositif le piston est généralement solidaire d'une tige qui traverse, de part et d'autre du piston, les fonds du cylindre, ou vérin. Cette tige est reliée à l'un des deux éléments de la structure, et le cylindre est fixé à l'autre élément de structure. Dans le cas ou la course nécessaire pour le bon fonctionnement du dispositif est grande, par exemple dans les ponts de grande longueur soumis à des variations de température importantes, les tiges sont longues et leur diamètre doit être augmenté à cause du possible flambage de la tige soumise à un grand effort de compression. Il en résulte une augmentation non souhaitable des dimensions de l'ensemble du dispositif.

En outre, dans ce type de dispositif d'amortissement oléodynamique, il est nécessaire d'adjoindre un vase ou réservoir d'expansion capable d'absorber l'augmentation du volume du fluide due aux augmentations de température car, sans cette précaution, la pression interne du dispositif pourrait atteindre des valeurs très élevées. L'adjonction d'un tel réservoir extérieur au dispositif et de son circuit hydraulique associé est toutefois également perçue comme une complication.

La présente invention a pour but de fournir un dispositif de liaison, en particulier un dispositif d'amortissement, ayant un rendement élevé, de fabrication et d'utilisation simple, de coût de fabrication limité, et dont le fonctionnement est fiable.

La présente invention a également pour but de fournir un tel dispositif ne reproduisant pas les inconvénients précités. En particulier, la présente invention a pour but de fournir un dispositif de liaison qui permet, à partir d'une pression quasi nulle en service normale, une montée en pression très rapide. De plus, la présente invention a également pour but de fournir un tel dispositif qui réduit ou supprime le risque de flambage de la tige et qui fournit donc une plus grande compacité du dispositif. D'autre part la présente invention a également pour but de fournir un tel dispositif qui évite l'adjonction d'un ou plusieurs circuits hydrauliques extérieurs au dispositif.

La présente invention a donc pour objet un ensemble comprenant un premier et un second élément d'une structure de génie civil et un dispositif d'amortissement entre ces éléments, ledit dispositif d'amortissement étant adapté à amortir au moins partiellement des déplacements relatifs entre lesdits premier et second éléments de structure lors de mouvements rapides, ledit dispositif comportant un cylindre fixe par rapport audit premier élément de structure, définissant deux chambres renfermant un produit fluide et séparées par une paroi, au moins un piston mobile pouvant coulisser dans ledit cylindre fixe, ladite paroi comportant au moins un passage qui relie les deux chambres entre elles, le dispositif comportant au moins une valve qui, au repos, obture ledit passage et qui, lors d'une augmentation de la pression dans l'une desdites chambres en raison d'un mouvement rapide dudit second élément de structure par rapport audit premier élément de structure, ouvre ledit passage, permettant ainsi l'écoulement du fluide à forte pression d'une chambre à l'autre, ladite valve étant sollicitée vers sa position fermée par un organe élastique, ladite valve étant bidirectionnelle et comportant un piston de valve coulissant dans un canal sensiblement perpendiculaire audit passage, entre une position fermée, où il obture de manière étanche ledit passage, et une position ouverte, où il ouvre ledit passage.

En particulier, ladite structure de génie civil peut être un pont et lesdits premier et second éléments de structure peuvent être une culée, une pile ou un tablier de pont.

D'autres caractéristiques et avantages de la présente invention apparaîtront au cours de la description détaillée suivante, donnée à titre d'exemple non limitatif, en regard des dessins joints, sur lesquels :
- la figure 1 représente une vue schématique d'un dispositif de liaison connu entre deux éléments d'une structure de génie civil ;
- la figure 2 est une vue schématique représentant un mode de réalisation avantageux d'un dispositif de liaison selon l'invention ;
- 1a figure 3 représente une vue schématique d'un dispositif de liaison selon au autre mode de réalisation avantageux de l'invention ;
- la figure 4 représente une vue schématique plus détaillée de la valve du dispositif d'amortissement selon l'invention ; et
- la figure 5 représente une vue schématique d'un dispositif de liaison incorporant un vase d'expansion interne au dispositif selon un mode de réalisation avantageux de l'invention.

La présente invention concerne un dispositif d'amortissement entre un premier élément de structure 10 et un second élément de structure 20 d'une structure de génie civil, en particulier d'un pont et la description détaillée suivante sera réalisée en référence à de tels éléments d'un pont.

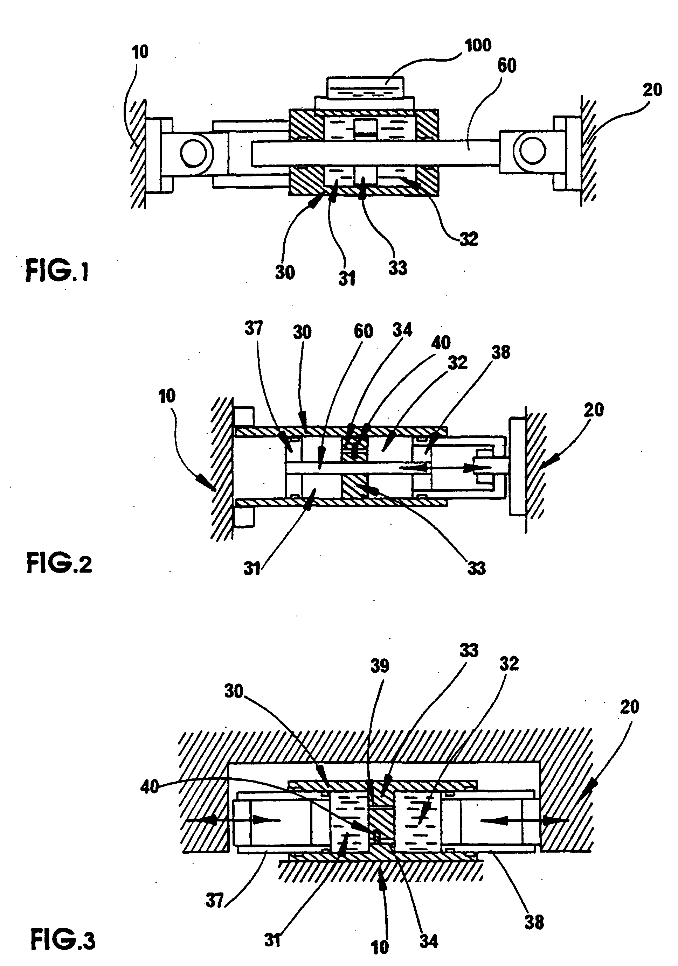

En référence à la figure 1, représentant un dispositif de liaison connu, et aux figures 2 et 3, qui représentent. deux modes de réalisation différents d'un dispositif selon l'invention et dont les avantages respectifs seront décrits ultérieurement, le dispositif d'amortissement comporte un cylindre 30 (ou vérin) qui est fixe par rapport à l'un des deux éléments de structure, par exemple par rapport au premier élément de structure 10. Ce cylindre 30 définit deux chambres 31, 32 renfermant un produit fluide, avantageusement de l'huile, lesdites chambres 31, 32 étant séparées par une paroi 33.

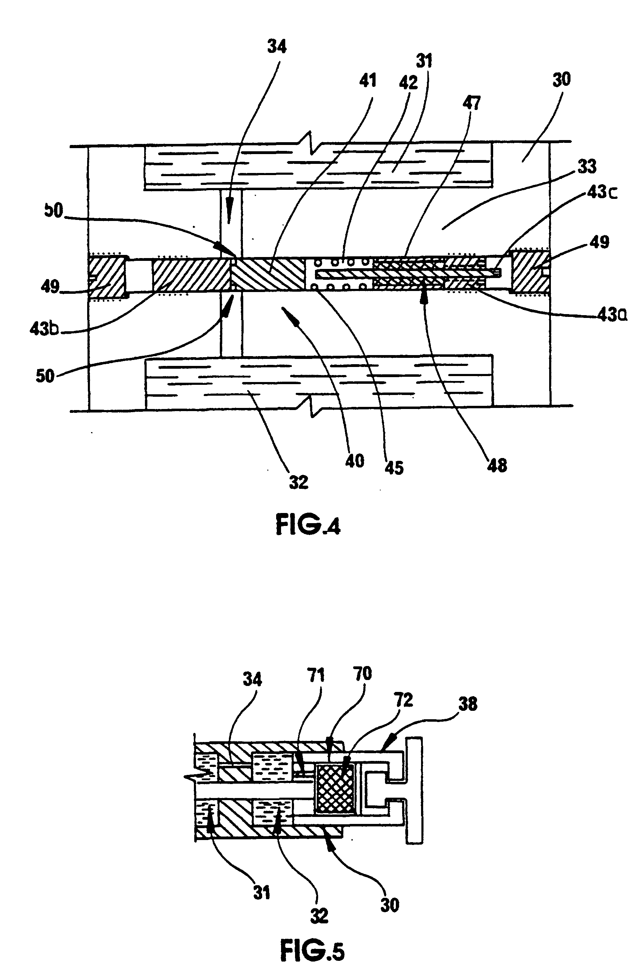

En référence à la figure 4, ladite paroi 33 comporte selon l'invention, au moins un passage 34 qui relie les deux chambres 31, 32 entre elles, et au moins une valve 40 qui, au repos, obture ledit passage 34 et qui lors d'une augmentation de la pression dans l'une desdites chambres 31, 32 en raison d'un mouvement rapide dudit second élément de structure 20 par rapport audit premier élément de structure 10, notamment en cas de séisme, ouvre ledit passage 34. L'écoulement de fluide à forte pression d'une chambre à l'autre est ainsi permis et l'amortissement est obtenu par perte de charge qui se traduit par l'échauffement dudit fluide. L'invention sera ci-après décrite en référence à un seul passage 34 comportant une seule valve 40, étant entendu qu'un nombre quelconque souhaitable de passages et/ou de valves peut être prévu.

Cette valve 40 comporte un piston de valve 41 coulissant dans un canal 42 sensiblement perpendiculaire audit passage 34. Ledit canal 42, de même que ledit piston de valve 41 sont de préférence cylindriques, mais la section du canal n'est pas nécessairement constante. Avantageusement, comme visible sur la figure 4, le canal est disposé au centre de la paroi 33 et traverse ledit passage 34 qui relie les deux chambres 31, 32 entre elles. Il est obturé à ses extrémités par des bouchons 49.

Au repos, ladite valve 40 obture ledit passage 34 et, lors d'une augmentation de la pression dans l'une desdites chambres 31, 32, elle ouvre ledit passage 34, permettant ainsi l'écoulement de fluide d'une chambre à l'autre, réalisant ainsi l'amortissement souhaité. C'est le piston de valve 41 qui obture de manière étanche ledit passage 34 dans la position fermé de la valve et qui en position ouverte ouvre ledit passage 34, ledit piston 41 étant sollicité vers sa position fermée par un organe élastique 45. Cet organe élastique 45 peut avantageusement être réalisé sous la forme d'un ressort qui agit d'une part sur ledit piston de valve 41 et qui est solidaire d'autre part d'un premier organe de butée 43a disposé également dans ledit canal 42 et dont la position dans ledit canal 42 peut être fixé, par exemple par vissage, en fonction de la pression souhaitée du ressort 45. Ainsi le ressort 45 est de pression réglable. Éventuellement, entre le ressort 45 et le premier organe de butée 43a, on peut prévoir dans le canal 42 un tube entretoise 47 qui sert d'une part à supporter une extrémité du ressort 45 et d'autre part à loger un petit cylindre en matériau compressible tel qu'une mousse à cellules fermées, de façon à permettre, par compression de l'air, la diminution de volume nécessaire pour permettre le déplacement du piston de valve 41, dans le cas où du fluide aurait pénétré dans l'espace situé dans le canal 42, derrière le piston 41.

On prévoit un second organe de butée 43b dans la partie de gauche sur la figure du canal 42, qui est disposé avec précision et de manière réglable dans le canal 42 pour se terminer à un quelconque niveau souhaité dans ledit passage 34, de préférence en son milieu. De cette manière, le diamètre du passage 34 est réduit à cet endroit et le montant de cette réduction permet de déterminer les performances d'amortissement souhaitées par perte de charge du dispositif, en fonction des divers paramètres liés au fonctionnement de celui-ci, tel que notamment la force et la pression maximales, la vitesse maximale et la période du séisme, la course totale. En variante, cette partie de diamètre réduit du passage 34 peut ausi être réalisée au moyen d'un ou plusieurs inserts (non représentés) placés dans ledit passage 34 ou, par exemple, par des cylindres pleins percés d'un orifice calibré introduit latéralement dans des trous perpendiculaires auxdits passages du fluide 34.

Dans l'exemple de réalisation représenté sur la figure 4, le canal 42 traverse la totalité de la paroi 33, mais ledit canal 42 peut également n'être pas traversant dans ladite paroi 33 et ne s'étendre que d'un côté dudit passage 34.

Le piston de valve 41 est sensiblement cylindrique ou peut être constitué de plusieurs parties cylindriques de diamètres différents. Il comporte à son extrémité qui obture le passage 34 en position fermée, au moins une encoche 50 ouverte sur ledit passage 34, de sorte que lors d'une montée de pression dans l'une des chambres 31, 32, le piston de valve 41 ouvre ledit passage 34, contre la pression du ressort 45, par l'intermédiaire de la composante axiale de la force qui s'applique dans ladite au moins une encoche 50. De préférence, comme représenté sur la figure 4, ledit piston 41 comporte deux encoches 50 diamétralement opposées et chacune ouverte sur une partie du passage 34, respectivement de part et d'autre dudit piston 41 lorsque celui-ci ferme ledit passage 34. Ce piston 41 est également avantageusement muni de joints toriques d'étanchéité pour coulisser dans le canal 42 de manière étanche et ainsi éviter, si possible, une pénétration de fluide dans ledit canal 42. Le déplacement ou ouverture du piston est de préférence réglable au moyen d'un troisième organe de butée 43c qui limite la course dudit piston. La position de cette troisième butée 43c est donc également réglable dans le canal 42.

Eventuellement, on prévoit des moyens (non représentés) pour empêcher une rotation du piston de valve 41, dans le canal 42, par rapport à son axe longitudinal. Ces moyens peuvent être de tous types, tels que des nervures, rainures, butées, etc.

Le fonctionnement de la valve selon l'invention est le suivant :

En fonctionnement normal, en dehors des séismes, la pression à l'intérieur du dispositif est très faible. Le fluide peut avantageusement circuler d'une chambre à l'autre en suivant les mouvements lents de la structure dûs au variation de température, à travers un petit orifice 39 qui relie lesdites chambres 31, 32 entre elles. Ce petit orifice 39 permet ainsi un déplacement relatif entre les éléments de structure 10 et 20 lors de mouvements lents, et il a typiquement un diamètre de l'ordre de quelques dixièmes de millimètre. Il peut être ménagé dans la paroi 33 séparément du passage 34, comme représenté sur la figure 3, mais il peut également être disposé au même niveau que la passage 34, par exemple sous la forme d'une rainure ménagée dans une paroi dudit passage 34 . En cas de secousse sismique, la pression dans au moins une des chambres 31, 32 augmente très fortement en raison de la compression du fluide, puisque l'écoulement du fluide n'est plus possible à travers le petit orifice 39. Par conséquent, le piston de valve 41 qui est plaqué par le ressort 45 contre le bouchon 49 subit également une forte pression latérale du côté de la chambre qui est mise en pression. La force exercée par le fluide sous pression sur la surface extérieure sensiblement cylindrique du piston 41, cette force étant sensiblement perpendiculaire à celui-ci, maintient le passage 34 fermé. Toutefois la ou les encoches 50 du piston située du côté de la chambre sous pression est également soumise à une force qui elle, comporte une composante axiale dans le sens de l'axe du piston 41. Lorsque cette composante axiale est supérieure à la force du ressort 45, et éventuellement aux forces de frottement du piston 41 dans le canal 42, le piston 41 peut être déplacé contre la force du ressort. A partir de ce moment, le piston 41 s'écarte du bouchon 49 et la surface axiale soumise à la pression du fluide augmente considérablement et l'ouverture du piston 41 est obtenue rapidement permettant l'écoulement du fluide à forte pression d'une chambre à l'autre. Ainsi la valve 40 permet d'atteindre une grande pression avec un très faible déplacement, de l'ordre de quelque millimètre, ce qui améliore considérablement l'efficacité du dispositif. Lorsque le dispositif arrive en fin de course, la vitesse s'annule ainsi que la pression et la valve se referme. Le cycle décrit peut se répéter, dans les deux sens d'écoulement de fluide aussi longtemps que dure la secousse sismique. Ainsi, cette valve bidirectionnelle fonctionne dans les deux sens d'écoulement, ce qui permet de n'en prévoir qu'une seule pour un fonctionnement fiable (moins de pièces mobiles, d'organes élastiques et donc de problèmes d'étanchéité), et un coût limité.

L'invention concerne donc un dispositif d'amortissement oléodynamique comportant une valve 40 telle que décrite ci-dessus. Cette valve 40 s'adapte notamment dans les dispositifs d'amortissement connus dans l'art antérieur tels que représentés schématiquement sur la figure 1. Dans ce dispositif, la paroi 33 forme le piston mobile à l'intérieur du cylindre 30 et ledit piston 33 est relié par l'intermédiaire d'une tige 60, qui traverse les deux fonds du cylindre 30, au second élément de structure 20, alors que le cylindre 30 est fixé sur le premier élément de structure 10. La valve 40 (non représentée) est dans ce cas placée dans le piston mobile 33. L'efficacité du dispositif d'amortissement connu est donc fortement augmentée grâce à l'invention mais le dispositif comporte toutefois toujours certains inconvénients. Ainsi comme mentionné précédemment, les déplacements du piston 33 découlent des forces de compression et de traction de la tige 60. Ces forces pouvant être très importantes, le risque de flambage de la tige existe.

Pour augmenter encore d'avantage l'efficacité du dispositif d'amortissement selon l'invention, on prévoit avantageusement de remplacer la paroi de séparation 33 mobile par une paroi de séparation 33, ou diaphragme, fixe par rapport au cylindre 30, comme représenté sur les figures 2 et 3. Cette paroi fixe 33 peut être fixée audit cylindre 30 (fig. 2), ou être réalisée d'une pièce avec celui-ci (fig. 3 et 4). En référence plus spécifiquement à la figure 2, le cylindre 30 est donc fixé sur l'élément de structure 10 et la paroi 33, fixe par rapport audit cylindre 30, définit les deux chambres 31, 32. Bien entendu ladite paroi 33 incorpore le passage 34 et éventuellement le petit orifice 39 décrit précédemment. Chaque chambre 31 et 32 est délimitée du côté opposé à ladite paroi 33 par un piston mobile, référencé respectivement 37 et 38, qui se déplace avec étanchéité dans le cylindre 30. Au moins un desdits pistons 37 et 38 est solidaire du second élément de structure 20. En l'occurrence, sur la figure 2, le piston 38 est relié mécaniquement à ce second élément de structure 20, alors que l'autre piston mobile 37 est solidaire dudit premier piston 38 par l'intermédiaire d'une tige 60 qui traverse ladite paroi de séparation 33 des chambres.31 et 32. Plus spécifiquement, le piston 38 de la figure 2 peut être formé par un tube qui est muni à son extrémité opposée à la chambre 32 de moyens, généralement légèrement articulés, de fixation audit second élément de structure 20. Ce second élément de structure 20 peut par exemple être le tablier d'un pont. L'avantage principal de cette mise en oeuvre est que la tige 60 du dispositif est seulement sollicitée en traction, éliminant dans ce cas pratiquement tout danger de flambage de cette tige, de sorte que celle-ci peut avoir une dimension minimale. Cette solution est particulièrement adaptée lorsqu'il est nécessaire d'amortir les effets du séisme dans le sens axial, c'est à dire lorsque les éléments de structure 10, 20 qui doivent être liés, se trouvent en face l'un de l'autre dans le sens de leur déplacement.

Dans le mode de réalisation de la figure 3, qui représente un dispositif de liaison qui relie une pile de pont 10 à un tablier de pont 20, la tige 60 peut complètement être supprimée. A cet effet chacun des deux pistons mobiles 37 et 38 peut être constitué sous la forme d'un tube qui, du côté de sa chambre respective 31 ou 32, se déplace avec étanchéité dans le cylindre 30, fixé sur la pile de pont 10. L'autre extrémité des pistons 37 et 38 est pourvue par exemple de butées, ou de quelconques moyens articulés, ou non, qui permettent de les relier mécaniquement au second élément de structure 20. Les pistons 37 et 38 ne sont dans ce cas pas reliés l'un à l'autre.

En cas de séisme, un au moins des deux pistons 37, 38 est sollicité et comprime le fluide de sa chambre respective. La paroi de séparation 33 incorpore évidemment le passage 34, la valve 40 et éventuellement le petit orifice 39 et le fonctionnement de l'amortisseur est similaire à celui décrit précédemment. Dans ce mode de réalisation, le dispositif est très compacte car la section utile du piston est maximale, en raison de l'absence de la tige. D'autre part, la tige étant remplacée par des pistons tubulaire ayant un moment d'inertie beaucoup plus grand, leur flambage est beaucoup moins critique et il n'est généralement pas nécessaire d'en tenir compte.

Une autre caractéristique avantageuse de l'invention est représentée schématiquement sur la figure 5. Ainsi, pour éviter un vase ou réservoir d'expansion extérieur au dispositif d'amortissement, comme représenté sous la référence 100 sur la figure 1, l'invention prévoit de ménager un réservoir 70 dans au moins un des pistons mobiles. Ce réservoir 70 est relié à au moins une desdites chambres 31, 32 par un petit conduit 71 avantageusement muni d'un clapet (non représenté) qui isole instantanément le réservoir 70 de la chambre à laquelle il est relié lorsque la pression dans cette dernière augmente au delà d'une valeur fixée d'avance. Ce réservoir 70 est partiellement ou totalement rempli d'un matériau compressible 72 adapté à se comprimer pour permettre une dilatation dudit produit fluide. Ce matériau compressible 72 peut par exemple être une mousse en matière plastique, par exemple un élastomère, compatible avec le produit fluide utilisé dans le dispositif. Cette mousse contient des cellules d'air fermé et est par conséquent très compressible. C'est donc ce réservoir 70 qui joue le rôle du vase d'expansion de manière très efficace et qui évite tout circuit hydraulique extérieur au dispositif.

Au montage du dispositif, le réservoir 70 est rempli de fluide tout comme les chambres 31 et 32. Le seul air contenu dans le réservoir est celui des cellules de la mousse 72. En service normal le dispositif n'est soumis à aucune pression interne significative. Lorsque la température du fluide augmente, il se dilate et grâce aux orifices qui relient la ou les chambres 31 et 32 au réservoir 70 du piston, le fluide, qui est globalement confiné, voit sa pression augmenter et, par conséquence, comprime l'air contenu dans les cellules de la mousse. Comme la dilatation du fluide est très lente, on peut considérer qu'elle se fait à température constante. L'augmentation de volume de fluide est ainsi du même ordre de grandeur que la compression de l'air des cellules. Il suffit que le volume de mousse soit suffisant pour que l'augmentation globale soit réduite à des valeurs tout à fait acceptable, de l'ordre de quelque bars au plus. Un autre avantage de ce mode de réalisation est qu'il ne comporte ni d'évent ni de purge, et il permet donc l'installation et le fonctionnement du dispositif dans n'importe quelle position. Le clapet (non représenté) dont est muni le conduit de communication 71 entre une des chambres 31, 32 et le réservoir 70 contenant la mousse, protège celui-ci ainsi que la mousse contre toute possible détérioration lorsque le dispositif fonctionne lors d'un séisme, auquel cas la pression des chambres peut atteindre plusieurs centaines de bars.

Il est à noter que cette caractéristique avantageuse de supprimer le vase d'expansion extérieur s'adapte plus particulièrement aux modes de réalisation de l'invention représentés sur les figures 2 et 3, où le piston mobile central 33 de l'amortisseur représenté sur la figure 1 est remplacé par un ou deux pistons 37, 38 de forme tubulaire. Le réservoir 70 peut dans ce cas être ménagé à l'intérieur de ce tube formant le ou les pistons 37 et 38, comme représenté sur la figure 5.

Le mode de réalisation de l'invention qui combine au maximum tous les avantages susmentionnés consiste donc en un dispositif d'amortissement oléodynamique réalisé selon l'un des modes de réalisation des figures 2 et 3, comportant une valve selon l'invention et incorporant un vase d'expansion selon la figure 5. Il est à noter que l'exemple de réalisation du dispositif représenté sur la figure 4, qui montre de manière plus détaillée la valve 40, se rapporte plus particulièrement au mode de réalisation de l'invention représenté sur la figure 3, puisque la paroi 33 n'est pas traversée par une tige. Il doit être clair que cette valve s'adapte également à tous les autres modes de réalisation de l'invention décrits précédemment.

## Revendications

1. Ensemble comprenant un premier et un second élément (10, 20) d'une structure de génie civil et un dispositif d'amortissement entre ces deux éléments, ledit dispositif d'amortissement étant adapté à amortir au moins partiellement des déplacements relatifs entre lesdits premier et second éléments de structure (10, 20) lors de mouvements rapides, ledit dispositif comportant un cylindre (30) fixe par rapport audit premier élément de structure (10), définissant deux chambres (31, 32) renfermant un produit fluide et séparées par une paroi (33), au moins un piston mobile (33 ; 37,38) pouvant coulisser dans ledit cylindre (30), ladite paroi (33) comportant au moins un passage (34) qui relie les deux chambres (31, 32) entre elles, le dispositif comportant au moins une valve qui, au repos, obture ledit passage (34) et qui, lors d'une augmentation de la pression dans l'une desdites chambres (31, 32) en raison d'un mouvement rapide dudit second élément de structure (20) par rapport audit premier élément de structure (10), ouvre ledit passage (34), permettant ainsi l'écoulement du fluide à forte pression d'une chambre à l'autre, ladite valve (40) étant sollicitée vers sa position fermée par un organe élastique (45), **caractérisé en ce que** ladite valve (40) est bidirectionnelle et comporte un piston de valve (41) coulissant dans un canal (42) sensiblement perpendiculaire audit passage (34), entre une position fermée, où il obture de manière étanche ledit passage (34), et une position ouverte, où il ouvre ledit passage (34).

2. Ensemble selon la revendication 1, dans lequel ledit piston (41) est sollicité vers sa position fermée par un ressort (45) de pression réglable.

3. Ensemble selon la revendication 2, dans lequel ledit piston de valve (41) est sensiblement cylindrique et comporte à son extrémité, qui obture le passage (34) en position fermée, au moins une encoche (50) ouverte sur ledit passage (34) de sorte que lors d'une montée de pression dans l'une des chambres (31, 32), le piston de valve (41) ouvre ledit passage (34) contre la pression du ressort (45) par l'intermédiaire de la composante axiale de la force qui s'applique dans ladite au moins une encoche (50).

4. Ensemble selon l'une quelconque des revendications 2 ou 3, dans lequel le ressort (45) agit d'une part sur ledit piston de valve (41) et est solidaire, d'autre part, d'un premier organe de butée (43a) dont la position dans ledit canal (42) peut être fixée en fonction de la pression souhaitée du ressort (45).

5. Ensemble selon l'une quelconque des revendications 1 à 4, dans lequel ledit canal (42) comporte un second organe de butée (43b) dont la position est réglable et qui se termine dans ledit passage (34), le piston de valve (41) coopérant avec ledit second organe de butée (43b) en position fermée, la présence dudit second organe de butée (43b) formant dans le passage (34) une partie de diamètre réduit qui détermine les performances d'amortissement par perte de charge du dispositif.

6. Ensemble selon la revendication 5, dans lequel ledit passage (34) comporte au moins une partie de diamètre réduit qui détermine les performances d'amortissement par perte de charge du dispositif.

7. Ensemble selon l'une quelconque des revendications précédentes, dans lequel ladite paroi de séparation (33) des deux chambres (31, 32) comporte en outre un petit orifice (39) qui relie lesdites deux chambres (31, 32) entre elles de telle manière à permettre un déplacement relatif entre lesdits élément de structure (10, 20) lors de mouvements lents.

8. Ensemble selon l'une quelconque des revendications précédentes, dans lequel ladite paroi (33) séparant les deux chambres (31, 32) est mobile par rapport audit cylindre fixe (30) et forme un piston mobile à l'intérieur dudit cylindre, ledit piston mobile (33) étant solidaire dudit second élément de structure (20) par l'intermédiaire d'une tige (60).

9. Ensemble selon l'une quelconque des revendications 1 à 7, dans lequel ladite paroi (33) séparant les deux chambres (31, 32) est fixe par rapport audit cylindre (30) et chaque chambre (31, 32) est délimitée du côté opposé à ladite paroi par un piston mobile (37, 38), au moins un desdits pistons mobiles (37, 38) étant solidaire dudit second élément de structure (20).

10. Ensemble selon la revendication 9, dans lequel un premier piston (38) desdits deux pistons mobiles (37, 38) est solidaire du second élément de structure (20) et l'autre piston mobile (37) est solidaire dudit premier piston (38) par l'intermédiaire d'une tige (60) qui traverse ladite paroi de séparation (33) des chambres (31, 32).

11. Ensemble selon la revendication 9, dans lequel les deux pistons mobiles (37, 38) sont solidaires du second élément de structure (20) et ne sont pas reliés l'un à l'autre.

12. Ensemble selon l'une quelconque des revendications précédentes, dans lequel au moins un piston mobile (33 ; 37, 38) comporte un réservoir (70) relié à au moins une desdites chambres (31, 32) par un petit conduit (71), ledit réservoir (70) étant au moins partiellement rempli d'un matériau compressible (72) adapté à se comprimer pour permettre une dilatation dudit produit fluide.

13. Ensemble selon la revendication 12, dans lequel ledit matériau compressible (72) est une mousse en matière plastique compatible avec ledit produit fluide.

14. Ensemble selon l'une quelconque des revendications précédentes, dans lequel ladite structure de génie civil est un pont et lesdits premier et second éléments de structure (10, 20) peuvent être une culée, une pile ou un tablier de pont.

## Claims

1. An assembly comprising a first and a second element (10, 20) of a civil engineering structure and a damping device between these two elements, the damping device being suitable for damping at least in part relative displacements between said first and second structural elements (10, 20) during rapid movements, said device including both a cylinder (30) which is stationary relative to said first structural element (10) and which defines two chambers (31, 32) that are separated by a wall (33) and that contain a fluid substance, and at least one moving piston (33; 37, 38) mounted to slide in said stationary cylinder (30), said wall (33) being provided with at least one passage (34) which interconnects the two chambers (31, 32), said damping device being provided with at least one valve (40) which, at rest, shuts off said passage (34) and which, when the pressure in one of said chambers (31, 32) increases due to said second structural element (20) moving rapidly relative to said first structural element (10), opens said passage (34), thereby enabling the fluid to flow at high pressure from one chamber to the other, said valve (40) being urged towards its closed position by a resilient member (45), **characterized in that** said valve (40) is a both-way valve and includes a valve piston (41) mounted to slide in a channel (42) that is substantially perpendicular to said passage (34) between a closed position, in which it shuts off said passage (34) in fluid-tight manner, and an open position, in which it opens said passage (34).

2. An assembly according to claim 1, in which said piston (41) is urged towards its closed position by a spring (45) of adjustable pressure.

3. An assembly according to claim 2, in which said valve piston (41) is substantially cylindrical, and, at its end that shuts off the passage (34) when it is in the closed position, said piston is provided with at least one notch (50) that is open to said passage (34) so that, when pressure rises in one of the chambers (31, 32), the valve piston (41) opens said passage (34) against the pressure from the spring (45) by means of the axial component of the force that is applied in said at least one notch(50).

4. An assembly according to any one of claims 2 or 3, in which the spring (45) firstly acts on said valve piston (41) and secondly is secured to a first stop member (43a) whose position in said channel (42) may be set as a function of the desired pressure of the spring (45).

5. An assembly according to any one of claims 1 to 4, in which said channel (42) is provided with a second stop member (43b) whose position is adjustable and which terminates in said passage (34), the valve piston (41) co-operating with said second stop member (43b) when it is in the closed position, the presence of said second stop member (43b) forming a portion of reduced diameter in the passage (34), the passage portion of reduced diameter determining the damping performance by headloss of the device.

6. An assembly according to claim 5, in which said passage (34) is provided with at least one portion of reduced diameter that determines the damping performance by headloss of the device.

7. An assembly according to any preceding claim, in which said separator wall (33) for separating the two chambers (31, 32) is further provided with a small orifice (39) which interconnects said two chambers (31, 32) so as to enable said structural elements (10, 20) to be displaced relative to each other during slow movements.

8. An assembly according to any preceding claim, in which said wall (33) separating the two chambers (31, 32) is mounted to move relative to said stationary cylinder (30), and forms a moving piston mounted to move inside said cylinder, said moving piston (33) being secured to said second structural element (20) via a rod (60).

9. An assembly according to any one of claims 1 to 7, in which said wall (33) separating the two chambers (31, 32) is stationary relative to said cylinder (30), and each chamber (31, 32) is delimited at the end remote from said wall by a moving piston (37, 38), at least one of said moving pistons (37, 38) being secured to said second structural element (20).

10. An assembly according to claim 9, in which a first piston (38) of said two moving pistons (37, 38) is secured to the second structural element (20), and the other moving piston (37) is secured to said first piston (38) via a rod (60) which passes through said separator wall (33) that separates the chambers (31, 32).

11. An assembly according to claim 9, in which both of the moving pistons (37, 38) are secured to the second structural element (20), and they are not coupled to each other.

12. An assembly according to any preceding claim, in which at least one moving piston (33; 37, 38) includes a tank (70) connected to at least one of said chambers (31, 32) via a small duct (71), said tank (70) being filled at least partially with a compressible material (72) suitable for being compressed to enable said fluid substance to expand.

13. An assembly according to claim 12, in which said compressible material (72) is a foam made of a plastics material that is compatible with said fluid substance.

14. An assembly according to any preceding claim, in which said civil engineering structure is a bridge, and said first and second structural elements (10, 20) may be an abutment, a pier, or a deck of a bridge.

## Patentansprüche

1. Baugruppe, aufweisend eine erstes und ein zweites Baustrukturelement (10, 20) und ein Dämpfungselement zwischen diesen beiden Elementen, wobei das Dämpfungselement dazu ausgelegt ist, zumindest Relativverschiebungen zwischen den ersten und zweiten Strukturelementen (10, 20) bei schnellen Bewegungen aufzunehmen, wobei die Vorrichtung einen in bezug auf das erste Strukturelement (10) feststehenden Zylinder (30) aufweist, der zwei Kammern (31, 32) festlegt, die ein Produktfluid einschließen und durch eine Wand (33) getrennt sind, wobei zumindest ein beweglicher Kolben (33; 37, 38) in der Kammer (30) gleitverschiebbar ist, wobei die Wand (33) zumindest einen Durchlass (34) aufweist, der die beiden Kammern (31, 32) miteinander verbindet, wobei die Vorrichtung zumindest ein Ventil aufweist, welches in seiner Ruhestellung den Durchlass (34) verschließt, und das bei einer Erhöhung des Drucks in den Kammern (31, 32) aufgrund einer schnellen Bewegung des zweiten Strukturelements (20) in bezug auf das erste Strukturelement (10) den Durchlass (34) öffnet und dadurch Fluid unter hohem Druck von einer Kammer in die andere Kammer strömen lässt, wobei das Ventil (40) in Richtung auf seine Schließstellung durch ein elastisches Organ (45) vorgespannt ist, **dadurch gekennzeichnet, dass** das Ventil (40) bidirektionell ist und einen Ventilkolben (41) aufweist, der in einem Kanal (42) im wesentlichen senkrecht zu dem Durchlass (34) zwischen einer Schließstellung, in welcher er den Durchlass (34) dicht verschließt und einer Öffnungsstellung gleitbeweglich ist, in welcher er den Durchlass (34) öffnet.

2. Baugruppe nach Anspruch 1, in welchem der Kolben (41) in Richtung auf seine Schließstellung durch eine regelbare Druckfeder (35) vorgespannt ist.

3. Baugruppe nach Anspruch 2, wobei der Ventilkolben (41), im wesentlichen zylindrisch ist und an seinem Ende, welches den Durchlass (34) in der Schließstellung versperrt, zumindest eine Vertiefung (50) aufweist, die zu dem Durchlass (34) derart ausmündet, dass bei einer Druckerhöhung in den Kammern (31, 32) der Ventilkolben (41) den Durchlass (34) gegen den Druck der Feder (45) durch die axiale Kraftkomponente öffnet, die in zumindest einer Eintiefung (50) zur Ausbildung gelangt.

4. Baugruppe nach Anspruch 2 oder 3, wobei die Feder (45) einerseits auf den Ventilkolben (41) einwirkt und andererseits mit einem ersten Anschlagorgan (43) in fester Verbindung steht, dessen Position in dem Kanal (42) als Funktion des gewünschten Drucks der Feder (45) festgelegt sein kann.

5. Baugruppe nach einem der Ansprüche 1 bis 4, wobei der Kanal (42) ein zweites Anschlagorgan (43b) umfasst, dessen Position regelbar ist und das in dem Durchlass (34) endet, wobei der Ventilkolben (41) mit dem zweiten Anschlagorgan (43b) in seiner Schließstellung zusammenwirkt, wobei das Vorliegen des zweiten Anschlagorgans (43b) in dem Durchlass (34) einen verringerten Durchmesserteil bildet, der das Dämpfungsverhalten durch einen Druckverlust der Vorrichtung festlegt.

6. Baugruppe nach Anspruch 5, wobei der Durchlass (34) zumindest einen Teil verringerten Durchmessers aufweist, der das Dämpfungsverhalten durch Druckverlust der Vorrichtung festlegt.

7. Baugruppe nach einem der vorangehenden Ansprüche, wobei die Trennwand (33) der beiden Kammern (31, 32) außerdem eine Öffnung (39) aufweist, welche die beiden Kammern (31, 32) untereinander derart verbindet, dass eine Relativverschiebung zwischen den Strukturelementen (10, 20) bei langsamen Bewegungen möglich ist.

8. Baugruppe nach einem der vorangehenden Ansprüche, wobei die die beiden Kammern (31, 32) trennende Wand (33) in bezug auf den feststehenden Zylinder (30) beweglich ist und einen beweglichen Kolben im Innern des Zylinders bildet, wobei der bewegliche Kolben (33) mit dem zweiten Strukturelement (20) durch eine Stange (60) fest verbunden ist.

9. Baugruppe nach einem der Ansprüche 1 bis 7, wobei die in beiden Kammern (31, 32) trennende Wand in bezug auf den Zylinder (30) feststeht, und wobei jede Kammer (31, 32) auf der Seite in Gegenüberlage zu der Wand durch einen beweglichen Kolben (37, 38) begrenzt ist, wobei zumindest einer der beweglichen Kolben (37, 38) mit dem zweiten Strukturelement (20) fest verbunden ist.

10. Baugruppe nach Anspruch 9, wobei der erste Kolben (38) der beiden beweglichen Kolben (37, 38) mit dem zweiten Strukturelement (20) fest verbunden ist, und wobei der andere bewegliche Kolben (37) mit dem ersten Kolben (38) durch eine Stange (60) fest verbunden ist, welche die Trennwand (33) der Kammern (31, 32) durchsetzt.

11. Baugruppe nach Anspruch 9, wobei die beiden beweglichen Kolben (37, 38) mit dem zweiten Strukturelement (20) fest und miteinander nicht verbunden sind.

12. Baugruppe nach einem der vorangehenden Ansprüche, wobei zumindest ein beweglicher Kolben (33; 37, 38) einen Vorratsbehälter (70) umfasst, der zumindest mit einer der Kammern (31, 32) durch einen kleinen Kanal (71) verbunden ist, wobei der Vorratsbehälter (70) zumindest teilweise mit einem kompressiblen Material (72) gefüllt ist, das dazu ausgelegt ist, zu komprimieren, um eine Verdünnung des Produktfluids zu ermöglichen.

13. Baugruppe nach Anspruch 12, wobei das kompressible Material (32) ein Kunststoffschaum ist, der mit dem Produktfluid kompatibel ist.

14. Baugruppe nach einem der vorangehenden Ansprüche, wobei die Baustruktur eine Brücke ist, und wobei die ersten und zweiten Strukturelemente (10, 20) ein Widerlager, eine Säule oder ein Brückenüberbau sein können.
